# EUROPÄISCHE PATENTSCHRIFT

(11) **EP 1 202 888 B1**
(45) Veröffentlichungstag und Bekanntmachung des Hinweises auf die Patenterteilung: **22.12.2004**
(21) Anmeldenummer: 00951292.2
(22) Anmeldetag: 23.06.2000
(51) Int. Cl.: B60T 7/12, B60T 17/22, B60T 13/66

(54) **VERFAHREN ZUR DURCHFÜHRUNG EINES AUTOMATISCHEN BREMSVORGANGES IN EINEM FAHRZEUG**
METHOD FOR CARRYING OUT AN AUTOMATIC BRAKING PROCEDURE IN A VEHICLE
PROCEDE DE FREINAGE AUTOMATIQUE DANS UN VEHICULE

(30) Priorität: 21.08.1999 DE 19939817
(43) Veröffentlichungstag der Anmeldung: 08.05.2002
(73) Patentinhaber: DaimlerChrysler AG, 70567 Stuttgart (DE)
(72) Erfinder: FUCHS, Alexander, D-71069 Sindelfingen (DE); KIESEWETTER, Wolfgang, D-71155 Altdorf (DE); KNOFF, Bernd, D-73734 Esslingen (DE); LAUER, Carsten, D-70180 Stuttgart (DE); MAACK, Lorenz, D-71032 Böblingen (DE); PFEIFLE, Eberhard, D-73547 Lorch (DE); STEINER, Manfred, D-71364 Winnenden (DE)
(86) Internationale Anmeldenummer: PCT/EP2000/005803
(87) Internationale Veröffentlichungsnummer: WO 2001/014184

(56) Entgegenhaltungen:
- DE-A- 19 722 532
- US-A- 5 535 123
- US-A- 5 669 676
- US-A- 5 720 532

## Beschreibung

Die Erfindung betrifft ein Verfahren zur Durchführung eines automatischen Bremsvorganges in einem Fahrzeug nach dem Oberbegriff des Anspruches 1.

Es sind automatische Bremssysteme bekannt, die in Abhängigkeit einer Panikbewegung des Fahrers einen automatischen Bremsvorgang mit einem höheren als der Bremspedalstellung entsprechenden Bremsdruck auslösen. Die Panikbewegung des Fahrers wird üblicherweise anhand der Bremspedalgeschwindigkeit detektiert, wobei eine Panikbewegung für den Fall angenommen wird, daß die Pedalgeschwindigkeit einen Referenzwert überschreitet. In diesem Fall wird davon ausgegangen, daß der Fahrer eine höhere Bremskraft wünscht, als er aktuell über die Betätigung des Bremspedals vorgibt.

Derartige Systeme, die unter dem Oberbegriff "Bremsassistent" bekannt sind, sind beispielsweise in den Druckschriften DE 44 22 664 A1, DE 196 29 229 A1 und DE 196 41 470 A1 beschrieben worden.

Der Bremsassistent bleibt in der Regel so lange zugeschaltet, bis eine der Bremspedal-Zustandsgrößen den Referenzwert wieder unterschreitet, beispielsweise, indem der Fahrer die Bremspedalposition zurücknimmt, das Bremspedal vollständig freigibt, oder zumindest die Bremspedalkraft verringert. In diesem Fall wird davon ausgegangen, daß eine Verringerung der Bremskraft auf einen Wert, welcher der aktuellen Bremspedalstellung entspricht, vom Fahrer gewünscht ist.

Die Fahrerreaktionen, die zur Auslösung eines automatischen Bremsvorganges untersucht werden, werden über Sensoren erfaßt, wobei die Gefahr besteht, daß bauartbedingte Signalverfälschungen der Sensoren oder falsche Signale als Folge von Sensorfehlern zu einer verfrühten oder verspäteten oder aber zu gar keiner Auslösung des Bremsassistenten führen können. Insbesondere bei Verwendung eines einen Widerstandspotentiometer enthaltenden Sensors zur Erfassung des Bremspedalweges können bauartbedingte Schleiferübergangswiderstände auftreten, die am Eingang eines Steuer- oder Regelgerätes des Fahrzeugs zu Signaleinbrüchen führen können, welche aber üblicherweise innerhalb kurzer Zeit wieder ausgeglichen werden, so daß am Steuergerät ein korrekter Signalwert anliegt. Das Wiederansteigen des Signals nach dem Einbruch kann jedoch im Steuergerät als Panikbremsung interpretiert werden und zur Auslösung- eines automatischen, gleichwohl unerwünschten Bremsvorganges führen.

Aus der DE 197 22 532 A1 ist zudem ein Verfahren zur Störunterdrückung am Membranwegsensor eines Bremskraftverstärkers bekannt. Dabei wird der Beginn und das Ende der Störung erfasst und die aufgrund der Störung durchzuführende Maßnahme in Abhängigkeit von der Störungsdauer ausgewählt. Die zu Beginn der Störung erfasste Zustandsgröße wird festgehalten und bleibt bis zum Ende der Störung konstant. Zur Verhinderung von Fehlauslösungen des automatischen Bremsvorgangs am Ende der Störung wird einem Geschwindigkeitsfilter der ungefilterte Geschwindigkeitswert Null zugeführt.

Der Erfindung liegt das Problem zugrunde, ein zuverlässig funktionierendes, automatischen Bremssystems anzugeben.

Dieses Problem wird erfindungsgemäß mit den Merkmalen des Anspruches 1 gelöst.

Gemäß dem neuartigen Verfahren zur Durchführung eines automatischen Bremsvorganges in einem Fahrzeug ist vorgesehen, daß für den Fall, daß eine sensorisch erfaßte Zustandsgröße außerhalb eines zulässigen Toleranzbereiches liegt, die Auslösung des automatischen Bremsvorganges für einen bestimmten Zeitraum verhindert wird, wobei der Referenzwert, welcher der Auslösung des automatischen Bremsvorganges zugrunde liegt, zweckmäßig außerhalb des für die Aussetzung zu berücksichtigenden Toleranzbereiches liegt. Dadurch wird der Vorteil erzielt, daß Fehlfunktionen des Sensors zur Erfassung der Zustandsgröße zur Beschreibung der Fahrerreaktion bzw. des Ereignisses zur Auslösung des Bremsassistenten erkannt werden können, indem zunächst ein für die Auslösung des Bremsassistenten nicht relevanter Wert detektiert wird, welcher jedoch in einem ungewöhnlichen bzw. ausgezeichneten Wertebereich liegt, und anschließend die Auslösung des automatischen Bremsvorganges für einen bestimmten Zeitraum unterbunden wird. Innerhalb dieses Zeitraumes erfolgt eine Unterdrückung des automatischen Bremsvorganges auch für den Fall, daß die sensorisch erfaßten Zustandsgrößen die Auslösekriterien für die Erzeugung zusätzlicher Bremskraft erfüllen. Es ist dadurch sichergestellt, daß bei einer Signalstörung, welche insbesondere einen Abfall des Signalwerts zur Folge hat, sich eine Tot- bzw. Haltezeit anschließt, innerhalb der ohne Auslösung des automatischen Bremsvorganges das Signal auf seinen korrekten Wert wieder ansteigen kann. Nach Ablauf der Totzeit kann der automatische Bremsvorgang eingeleitet werden, sofern die hierfür relevanten Bedingungen erfüllt sind.

Gemäß dem neuen Verfahren wird ein markanter Zeitpunkt anhand eines außerhalb des zulässigen Toleranzbereiches liegenden Signalwertes identifiziert. An diesen markanten Zeitpunkt schließt sich die Haltezeit an, innerhalb der eine Auslösung des automatischen Bremsvorganges nicht möglich ist.

Gemäß einer zweckmäßigen Ausführung wird als zu untersuchende Zustandsgröße für die Auslösung des automatischen Bremsvorganges eine den Zustand des Bremspedals beschreibende Größe ermittelt, insbesondere die Bremspedalposition, die Bremspedal-Positionsänderung und/oder die Bremspedal-Geschwindigkeitsänderung. Bei Berücksichtigung der Bremspedal-Zustandsgrößen sowohl auf Lage-, Geschwindigkeits- als auch Beschleunigungsebene kann eine abgestufte Strategie realisiert werden, indem chronologisch aufeinanderfolgend zunächst der Wertebereich auf Lageebene, anschließend auf Geschwindigkeitsebene und schließlich auf Beschleunigungsebene untersucht wird.

Auf Lageebene wird hierbei bevorzugt der Sensorwert dahingehend untersucht, ob die Bremspedalposition kleiner wird bzw. in Richtung ihrer Ausgangsstellung zurückgeht. Sofern dies der Fall ist, wird die Zuschaltung automatischen Bremsdruckes solange unterbunden, bis der aktuell andauernde Bremsvorgang abgeschlossen ist. Der Rückgang des Bremspedals kann zwar grundsätzlich auch über die Bremspedalgeschwindigkeit festgestellt werden, es kann jedoch insbesondere im Bereich sehr kleiner Pedalgeschwindigkeiten vorteilhaft sein, die Änderung der Pedalstellung auf Lageebene zu detektieren, da in dem kleinen Geschwindigkeitsbereich die Untersuchung der Bremspedalposition präzisere Ergebnisse liefert als die Untersuchung der aus der Pedalposition abgeleiteten Geschwindigkeit.

Die automatische Bremsdruckerzeugung kann bis zu einem erneuten Ansteigen der Bremspedalposition ausgesetzt werden, wobei sowohl ein Rückgehen der Bremspedalposition bis zur unbelasteten Ausgangsstellung als auch ein erneutes Ansteigen aus einer Teilbremsstellung heraus möglich ist.

Zweckmäßig wird auf Geschwindigkeitsebene untersucht, ob die Bremspedalgeschwindigkeit einen zugeordneten Grenzwert unterschreitet, wobei als Grenzwert ein negativer Wert vorgegeben werden kann. Ist dies der Fall, wird die automatische Erzeugung von Bremsdruck vorteilhaft für eine vorgegebene oder ermittelte, konstante Haltezeit ausgesetzt. Die Untersuchung auf Geschwindigkeitsebene mit Vorgabe eines negativen Grenzwertes ermöglicht es, einen Signaleinbruch zu erkennen und anschließend die Auslösung der automatischen Bremsdruckerzeugung zu sperren, wodurch der Zeitraum, in welchem nach dem Signaleinbruch der Signalwert wieder stark auf den korrekten Wert ansteigt, für die Auslösung des automatischen Bremsvorganges ausgeblendet wird.

Der Geschwindigkeitsgrenzwert kann in der Weise gewählt werden, daß eine eindeutige Identifizierung eines Fehlsignals möglich ist bzw. eine Unterscheidung zu einer realen Rückwärtsbewegung des Bremspedals gegeben ist. Aber auch für den Fall, daß der Geschwindigkeitsgrenzwert innerhalb des vom Bremspedal zu erreichenden Geschwindigkeits-Wertebereiches liegt, führt eine Sperrung der automatischen Bremsdruckerzeugung zu keinen unerwünschten Ergebnissen, weil auch eine reale Rückwärtsbewegung zumindest innerhalb des darauf folgenden, in der Regel klein gewählten Haltezeitraumes keine Auslösung des automatischen Bremsvorganges erwarten läßt.

In bevorzugter Fortbildung des erfinderischen Verfahrens wird auch die Bremspedalverzögerung auf Überschreitung eines zugeordneten Verzögerungsgrenzwertes untersucht. Nimmt die Pedalgeschwindigkeit innerhalb eines betrachteten Zeitraumes um einen größeren Wert ab als durch den Verzögerungsgrenzwert als zulässig vorgegeben wird, so liegt der Sensorwert außerhalb eines zulässigen Wertebereiches und es wird die automatische Zuschaltung von Bremsdruck für einen gegebenen oder ermittelten Zeitraum verhindert.

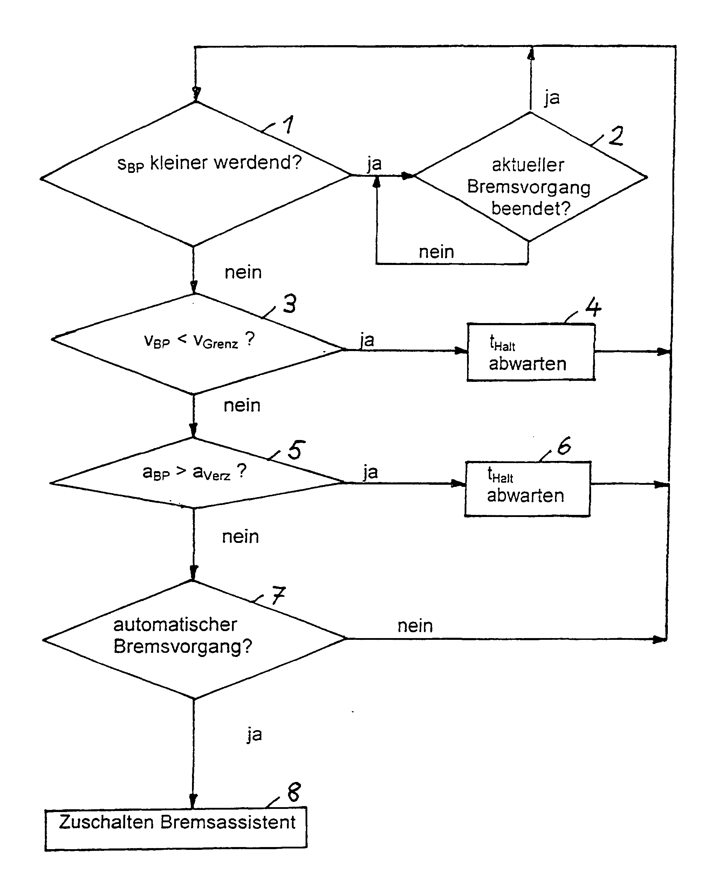

Weitere Vorteile und zweckmäßige Ausführungsformen sind den weiteren Ansprüchen, der Figurenbeschreibung und der Zeichnung zu entnehmen, die ein Ablaufdiagramm zur Durchführung eines automatischen Bremsvorganges zeigt.

Das in der Figur dargestellte Ablaufdiagramm zeigt ein Verfahren zur Feststellung von fehlerhaften Sensorwerten oder bauartbedingten Abweichungen in Sensorwerten eines Fahrzeug-Bremssystems, welches über ein konventionell zu bedienendes Bremspedal ansteuerbar ist und darüberhinaus ein System zur automatischen Erzeugung von Bremsdruck in Notfallsituationen (Bremsassistent), das insbesondere einen höheren als der Bremspedalstellung entsprechenden Bremsdruck generiert, umfaßt. Über die Sensoren des Bremssystems können Fahrerreaktionen, insbesondere die Bremspedalposition bzw. -geschwindigkeit, und/oder externe Ereignisse außerhalb des Fahrzeugs erfaßt und der Entscheidung zugrunde gelegt werden, ob eine Zuschaltung des Bremsassistenten erforderlich ist, wobei üblicherweise nur in Situationen zugeschaltet wird, in denen eine höhere Bremskraft benötigt wird als es der aktuellen, vom Fahrer erzeugten Bremspedalstellung entspricht. Als Kriterium zur Auslösung des Bremsassistenten kann die Bremspedalgeschwindigkeit, aber auch die Abnahme der Gaspedalposition, die Geschwindigkeit des Wechsels des Fahrerfußes von Gaspedal zu Bremspedal oder aber außerhalb des Fahrzeug liegende Ereignisse wie zum Beispiel Abstand und Relativgeschwindigkeit zu anderen Fahrzeugen berücksichtigt werden, wobei das gezeigte Ablaufschema in ein Abstands- und Geschwindigkeits-Regelsystem integriert werden kann.

Gemäß dem Ablaufdiagramm wird in einem Verfahrensschritt 1 zunächst untersucht, ob die Bremspedalposition s_{BP} im Vergleich zu einem zuvor durchlaufenen Zyklus abnimmt. Sofern dies der Fall ist, wird der Ja-Verzweigung entsprechend zum Verfahrensschritt 2 fortgefahren. Andernfalls wird der Nein-Verzweigung entsprechend der Verfahrensschritt 3 angesteuert.

Es kann gegebenenfalls zweckmäßig sein, im Verfahrensschritt 1 bzw. 2 zusätzlich die Position eines Bremslichtschalters sowie die Position eines Löseschalters, welcher die Funktion hat, den automatischen Bremsassistenten abzuschalten, sobald das Bremspedal aus einer Betätigungsstellung heraus einen Löseweg in Richtung Ausgangsstellung zurücklegt, zu berücksichtigen. Insbesondere über die Stellung des Löseschalters kann festgestellt werden, ob ein vom Fahrer ausgelöster Bremsvorgang stattfindet. In diesem Fall wird in zyklischen Wiederholungen die Abfrage gemäß Verfahrensschritt 1 gestartet, ob die Bremspedalposition s_{BP} im Vergleich zum vorausgegangenen Zyklus einen kleineren Wert einnimmt, das Bremspedal also gelöst wird. Durch Berücksichtigung der Position des Löseschalters und/oder gegebenenfalls des Bremslichtschalters kann Beginn und Ende eines aktuell stattfindenden Bremsvorganges festgestellt werden.

Sofern im Verfahrensschritt 1 während eines aktuellen Bremsvorganges eine kleiner werdende Bremspedalposition s_{BP} festgestellt wird, wird zum Verfahrensschritt 2 verzweigt, der eine auf die Zeitdauer des aktuellen Bremsvorganges beschränkte Haltefunktion darstellt. Gemäß Verfahrensschritt 2 wird in zyklischen Wiederholungen die Abfrage gestartet, ob der aktuell stattfindende Bremsvorgang beendet ist. Nach Beendigung des Bremsvorganges wird der Ja-Verzweigung entsprechend wieder zum Verfahrensschritt 1 zurückgekehrt, der Verfahrensablauf beginnt von neuem.

Falls im Verfahrensschritt 1 festgestellt worden ist, daß die Bremspedalposition nicht kleiner geworden ist, sondern einer monoton steigenden Funktion folgt und im Vergleich zum vorausgegangenen Zyklus den gleich hohen oder einen größeren Wert einnimmt, wird der Nein-Verzweigung entsprechend zum Verfahrensschritt 3 fortgefahren. Die im Verfahrensschritt 1 festgestellte, monoton ansteigende Funktion bedeutet, daß entweder das Bremspedal unbetätigt ist, (s_{BP} = 0) oder, daß das Fahrzeug sich inmitten eines Bremsvorganges mit unveränderter oder zunehmender Bremspedalposition befindet. In diesem Zustand ist die Aktivierung des Bremsassistenten grundsätzlich jederzeit möglich, soweit keine sonstigen, der Aktivierung entgegenstehenden Hinderungsgründe vorliegen.

Im Verfahrensschritt 3 wird abgefragt, ob die Bremspedalgeschwindigkeit v_{BP} einen Grenzwert v_{Grenz} unterschreitet. Falls dies zutrifft, wird der Ja-Verzweigung entsprechend zum Verfahrensschritt 4 fortgefahren, gemäß dem die Aktivierung des Bremsassistenten für die Zeitdauer t_{Halt} ausgesetzt wird. Nach Ablauf der Zeitdauer t_{Halt} wird zum Verfahrensschritt 1 zurückgekehrt und das Ablaufschema erneut durchlaufen, wobei eine erneute Überprüfung gestartet wird, ob Hinderungsgründe für die Zuschaltung des Bremsassistenten vorliegen.

Die Überprüfung der Bremspedalgeschwindigkeit v_{BP} im Hinblick auf Unterschreitung der vorgegebenen Grenzgeschwindigkeit v_{Grenz} dient dem Zweck festzustellen, ob auf der Ebene eines die Pedalgeschwindigkeit v_{BP} repräsentierenden Sensorsignals ein Signaleinbruch vorliegt. Die Ursache eines derartigen Signalbruchs kann sowohl in einer realen Rückwärtsbewegung des Bremspedales liegen als auch in einem bauartbedingten Verhalten des Sensors, beispielsweise durch einen plötzlich auftretenden Übergangswiderstand am Widerstandspotentiometer eines die Bremspedalstellung messenden Membranwegsensors bedingt sein. In beiden Fällen wird, sofern der Signaleinbruch so groß geworden ist, daß die Grenzgeschwindigkeit v_{Grenz} unterschritten wird, der Ja-Verzweigung des Verfahrensschrittes 3 entsprechend im Verfahrensschritt 4 die Haltezeit t_{Halt} abgewartet, bevor weitere Aktionen durchgeführt werden. Insbesondere im Falle eines Signaleinbruches als Folge eines Sensorproblems wird dadurch verhindert, daß der auf den Signaleinbruch folgende rapide Signalanstieg zu einer Fehlauslösung des Bremsassistenten führt. Nach dem Ablauf der Haltezeit t_{Halt}, welche üblicherweise auf eine Größenordnung von etwa 120 msec festgelegt wird, ist im Fall eines sensorbedingten Signaleinbruches der Wiederanstieg des Signals bereits abgeschlossen.

Über die Grenzgeschwindigkeit v_{Grenz} des Verfahrensschrittes 3 kann eine Unterscheidung zwischen einer tatsächlichen, positiven Bremspedalgeschwindigkeit, die zu einem Auslösen des Bremsassistenten führt, und einem sensorbedingten Fehlsignal getroffen werden. Der Bremsassistent wird üblicherweise ausgelöst, wenn die tatsächliche Bremspedalgeschwindigkeit v_{BP} einen positiven Referenzwert überschreitet, die Bremspedalposition also mit mindestens der dem Referenzwert entsprechenden Geschwindigkeit zunimmt. Die der Abfrage in Schritt 3 zugrundeliegende Grenzgeschwindigkeit v_{Grenz} nimmt dagegen einen negativen Wert ein, um klarzustellen, daß die Pedal-Rücknahmegeschwindigkeit gemessen und ausgewertet wird, und unterscheidet sich insofern von der positiven Referenzgeschwindigkeit. Für die Grenzgeschwindigkeit und die Referenzgeschwindigkeit werden unterschiedliche, sich nicht überschneidende Bereiche festgelegt.

Sofern im Verfahrensschritt 3 festgestellt wird, daß der Sensorwert der Pedalgeschwindigkeit v_{BP} die zugeordnete Grenzgeschwindigkeit v_{Grenz} nicht unterschreitet, wird der Nein-Verzweigung entsprechend zum Verfahrensschritt 5 fortgefahren, in welchem eine Überprüfung auf Beschleunigungsebene durchgeführt wird.

Im Verfahrensschritt 5 wird ein die Bremspedalverzögerung a_{BP} repräsentierender Signalwert auf Überschreitung eines vorgegebenen Verzögerungsgrenzwertes a_{Verz} überprüft. Mit Hilfe dieser Überprüfung sollen sensorbedingte Signaleinbrüche, welche eine sehr kurze Zeitdauer haben und auf eine Störstelle zurückzuführen sind, detektiert werden. Eine Überprüfung auf Beschleunigungs- bzw. Verzögerungsebene kann erforderlich werden, um geringfügige, kurze Störungen, welche gleichwohl in der Lage sind, den Bremsassistenten auszulösen, zu erfassen. Derartige Störungen können aufgrund kurzer Zeitdauer und geringer Amplitude auf Lage- oder Geschwindigkeitsebene nicht mit der erforderlichen Sicherheit erfaßt werden.

Sofern im Verfahrensschritt 5 festgestellt wird, daß der Signalwert der Bremspedalverzögerung a_{BP} den zugeordneten Grenzwert a_{Verz} übersteigt, kann eine Signalstörung vorliegen und es wird der Ja-Verzweigung entsprechend zum Verfahrensschritt 6 fortgefahren, in welchem vor Rückkehr zum Verfahrensschritt 1 eine vorgegebene oder in Abhängigkeit aktueller Größen berechnete Haltezeit t_{Halt} abgewartet wird, so daß während des Zeitraums der Haltezeit t_{Halt} die Zuschaltung des Bremsassistenten blockiert ist.

Das Verzögerungskriterium spricht bei fast jedem Bremsvorgang an, sobald gegen Ende der Bremspedalbetätigung die Pedalgeschwindigkeit abnimmt. In dieser Phase ist eine Zuschaltung des Bremsassistenten aber üblicherweise ohnehin nicht zu erwarten, so daß die temporäre Sperrung des Bremsassistenten gemäß der Verzweigung von Verfahrensschritt 5 nach Verfahrensschritt 6 ohne negative Auswirkungen bleibt.

Falls der Sensorwert der Bremspedalverzögerung a_{BP} den zugeordneten Grenzwert a_{Verz} nicht überschreitet, wird der Nein-Verzweigung des Verfahrensschrittes 5 entsprechend zum Verfahrensschritt 7 fortgefahren, in welchem die Kriterien für die Zuschaltung des Bremsassistenten abgefragt werden. Als Kriterien können sowohl Zustandsgrößen innerhalb des Fahrzeuges, beispielsweise die positive Bremspedalgeschwindigkeit, als auch Zustandsgrößen außerhalb des Fahrzeugs, beispielsweise Abstand und Relativgeschwindigkeit zu vorauseilenden Fahrzeugen, berücksichtigt werden. Sind die entsprechenden Kriterien erfüllt, wird der Ja-Verzweigung entsprechend zum Verfahrensschritt 8 fortgefahren, gemäß dem der Bremsassistent zugeschaltet wird und ein automatischer Bremsvorgang mit einem höheren als der Bremspedalstellung entsprechenden Bremsdruck durchgeführt wird. Andernfalls wird der Nein-Verzweigung entsprechend zum Verfahrensschritt 1 zurückgekehrt.

Es kann gegebenenfalls zweckmäßig sein, das dargestellte Verfahren während eines bereits aktivierten automatischen Bremsvorganges zu durchlaufen und die Bremsdruckerzeugung zu unterbrechen, falls eine der untersuchten Zustandsgrößen außerhalb des zulässigen Toleranzbereiches liegt.

## Patentansprüche

1. Verfahren zur Durchführung eines automatischen Bremsvorganges in einem Fahrzeug, wobei über einen Sensor eine Zustandsgröße zur Beschreibung von Fahrerreaktionen und/oder Ereignissen außerhalb des Fahrzeugs erfaßt, mit einem Referenzwert verglichen und bei Überschreitung des Referenzwerts selbsttätig ein höherer als der Bremspedalstellung entsprechender Bremsdruck erzeugt wird,
**dadurch gekennzeichnet,**
**daß** die selbsttätige Erzeugung von Bremsdruck für eine bestimmte Haltezeit ausgesetzt wird, sobald die sensorisch erfaßte Zustandsgröße (s_{BP}, v_{BP}, a_{BP}) außerhalb eines zulässigen Toleranzbereiches liegt.

2. Verfahren nach Anspruch 1,
**dadurch gekennzeichnet,**
**daß** als Zustandsgröße eine den Zustand des Bremspedals beschreibende Größe (s_{BP}, v_{BP}, a_{BP}) berücksichtigt wird.

3. Verfahren nach Anspruch 2,
**dadurch gekennzeichnet,**
**daß** als Zustandsgröße die Bremspedal-Positionsänderung (v_{BP}) berücksichtigt wird.

4. Verfahren nach Anspruch 3,
**dadurch gekennzeichnet,**
**daß** die selbsttätige Erzeugung von Bremsdruck ausgesetzt wird, falls die Bremspedal-Positionsänderung (v_{BP}) einen zugeordneten Grenzwert (v_{Grenz}) unterschreitet.

5. Verfahren nach einem der Ansprüche 2 bis 4,
**dadurch gekennzeichnet,**
**daß** als Zustandsgröße die Bremspedal-Geschwindigkeitsänderung (a_{BP}) berücksichtigt wird.

6. Verfahren nach Anspruch 5,
**dadurch gekennzeichnet,**
**daß** die selbsttätige Erzeugung von Bremsdruck ausgesetzt wird, falls die Bremspedal-Geschwindigkeitsänderung (a_{BP}) einen zugeordneten Grenzwert (a_{Verz}) überschreitet.

7. Verfahren nach einem der Ansprüche 2 bis 6,
**dadurch gekennzeichnet,**
**daß** die selbsttätige Bremsdruckerzeugung für die Dauer eines laufenden Bremsvorganges verhindert wird, falls die Bremspedalposition (s_{BP}) zurückgeht.

8. Verfahren nach einem der Ansprüche 1 bis 7,
**dadurch gekennzeichnet,**
**daß** die Haltezeit (t_{Halt}), innerhalb der die automatische Zuschaltung von Bremsdruck verhindert ist, auf einen konstanten Zeitraum befristet ist.

9. Verfahren nach einem der Ansprüche 1 bis 8,
**dadurch gekennzeichnet,**
**daß** eine Zuschaltung der selbsttätigen Bremsdruckerzeugung erst möglich ist, nachdem ein Bremslichtschalter im Fahrzeug passiv geschaltet worden ist.

10. Verfahren nach einem der Ansprüche 1 bis 9,
**dadurch gekennzeichnet,**
**daß** eine Zuschaltung der selbsttätigen Bremsdruckerzeugung erst möglich ist, nachdem ein Löseschalter zur Erfassung einer Betätigung des Bremspedals passiv geschaltet worden ist.

11. Verfahren nach einem der Ansprüche 1 bis 10,
**dadurch gekennzeichnet,**
**daß** der automatische Bremsvorgang nach Ablauf der Haltezeit (t_{Halt}) wieder aufgenommen wird.

## Claims

1. Method for carrying out an automatic braking process in a vehicle, wherein a state variable for describing driver reactions and/or events outside the vehicle is detected via a sensor, compared with a reference value and, when the reference value is exceeded, a higher braking pressure than that corresponding to the brake pedal position is automatically generated, **characterised in that** the automatic generation of braking pressure is discontinued for a specific holding time as soon as the state variable (S_{BP}, V_{BP}, a_{BP}) detected by sensor is outside an acceptable tolerance range.

2. Method according to claim 1, **characterised in that** a variable (S_{BP}, V_{BP}, a_{BP}) describing the state of the brake pedal is taken into account as the state variable.

3. Method according to claim 2, **characterised in that** the brake pedal position change (V_{BP}) is taken into account as the state variable.

4. Method according to claim 3, **characterised in that** the automatic generation of braking pressure is discontinued if the brake pedal position change (V_{BP}) falls below an associated limit value (Vₗᵢₘᵢₜ).

5. Method according to any one of claims 2 to 4, **characterised in that** the brake pedal speed change (a_{BP}) is taken into account as the state variable.

6. Method according to claim 5, **characterised in that** the automatic generation of braking pressure is discontinued if the brake pedal speed change (a_{BP}) exceeds an associated limit value (a_{dec}).

7. Method according to any one of claims 2 to 6, **characterised in that** the automatic braking pressure generation is prevented for the duration of a current braking process, if the brake pedal position (s_{BP}) returns.

8. Method according to any one of claims 1 to 7, **characterised in that** the holding time (t_{hold}), within which the automatic activation of braking pressure is prevented, is limited to a constant time period.

9. Method according to any one of claims 1 to 8, **characterised in that** it is only possible to activate the automatic generation of braking pressure once a brake light switch in the vehicle has been switched to a passive state.

10. Method according to any one of claims 1 to 9, **characterised in that** the automatic generation of braking pressure can only be activated once a trigger switch for detecting actuation of the brake pedal has been switched to a passive state.

11. Method according to any one of claims 1 to 10, **characterised in that** the automatic braking process is resumed again once the holding time (t_{hold}) has expired.

## Revendications

1. Procédé pour effectuer un processus de freinage automatique dans un véhicule, où, par l'intermédiaire d'un capteur, une grandeur d'état, servant à décrire des réactions du conducteur et/ou des évènements, est appréhendée à l'extérieur du véhicule, est comparée à une valeur de référence et, en cas de dépassement de la valeur de référence, une pression de freinage correspondante, supérieure à la position de la pédale de frein est générée automatiquement, **caractérisé en ce que** la génération automatique de la pression de freinage est interrompue pendant un temps de maintien déterminé, dès que la grandeur d'état (S_{BP}, V_{BP}, a_{BP}), appréhendée par le capteur, se situe hors d'une plage de tolérance admissible.

2. Procédé selon la revendication 1, **caractérisé en ce qu'**en tant que grandeur d'état est prise en compte une grandeur (S_{BP}, V_{BP}, a_{BP}) décrivant l'état de la pédale de frein.

3. Procédé selon la revendication 2, **caractérisé en ce qu'**en tant que grandeur d'état est prise en compte la variation de position de pédale de frein (V_{BP}).

4. Procédé selon la revendication 3, **caractérisé en ce que** la génération automatique de pression de freinage est interrompue dans le cas où la variation de position de pédale de frein (V_{BP}) descend au-dessous d'une valeur limite (V_{Limite}) associée.

5. Procédé selon l'une des revendications 2 à 4, **caractérisé en ce que**, en tant que grandeur d'état, est prise en compte la variation de vitesse de pédale de frein (a_{BP}).

6. Procédé selon la revendication 5, **caractérisé en ce que** la génération automatique d'une pression de freinage est interrompue dans le cas où la variation de vitesse de pédale de frein (a_{BP}) dépasse une valeur limite (a_{verz}) associée.

7. Procédé selon l'une des revendications 2 à 6, **caractérisé en ce que** la génération automatique d'une pression de freinage est empêchée pendant la durée d'un processus de freinage en cours, dans le cas où la position de pédale de frein (S_{BP}) se rétracte.

8. Procédé selon l'une des revendications 1 à 7, **caractérisé en ce que** le temps de maintien (t_{Maintien}), dans les limites duquel le branchement automatique de la pression de freinage est empêché, est fixé à une durée constante.

9. Procédé selon l'une des revendications 1 à 8, **caractérisé en ce qu'**un branchement de la génération de pression de freinage automatique est possible ultérieurement, après qu'un interrupteur de feu de freinage, monté dans le véhicule, soit passé à l'état passif.

10. Procédé selon l'une des revendications 1 à 9, **caractérisé en ce qu'**un branchement de la génération de automatique de pression de freinage est rendu possible ultérieurement, après qu'un interrupteur de défreinage, visant à appréhender un actionnement de la pédale de frein, soit passé à l'état passif.

11. Procédé selon l'une des revendications 1 à 10, **caractérisé en ce que** le processus de freinage automatique est repris après expiration du temps de maintien (t_{Maintien}).
